# EUROPEAN PATENT SPECIFICATION

(11) **EP 2 798 417 B1**
(45) Date of publication and mention of the grant of the patent: **16.08.2017**
(21) Application number: 12818918.0
(22) Date of filing: 26.12.2012
(51) Int. Cl.: G06F 3/06, G05B 19/042, G05B 19/418, G06F 13/16

(54) **A RELAY INTERFACE MODULE FOR A DISTRIBUTED CONTROL SYSTEM**
RELAISSCHNITTSTELLENMODUL FÜR EIN VERTEILTES STEUERSYSTEM
MODULE D'INTERFACE RELAIS DESTINÉ À UN SYSTÈME DE COMMANDE RÉPARTI

(30) Priority: 26.12.2011 IN 4556CH2011
(43) Date of publication of application: 05.11.2014
(73) Proprietor: ABB Research Ltd., 8050 Zürich (CH)
(72) Inventor: GHOSH, Sanjay, Bangalore 560 016 (IN); KANDE, Mallikarjun, Bangalore 485 001 (IN); WAHLER, Michael, 8055 Zurich (CH); KOUL, Sanjeev, Bangalore 560 067 (IN); SUNDARAM, Senthil, Kumar, Bangalore 560 037 (IN); SANKARAN, Sunderam, Salem 636 007 (IN)
(74) Representative: Zimmermann & Partner Patentanwälte mbB
(86) International application number: PCT/IB2012/002799
(87) International publication number: WO 2013/098633

(56) References cited:
- WO-A1-99/50726
- WO-A2-2006/119011
- WO-A2-2007/021712
- GB-A- 2 445 636
- US-A1- 2010 100 654

## Description

### TECHNICAL FIELD

The invention relates generally to a device and a method for transferring IO data to more than one controller in a distributed control system and more specifically to a relay interface module that enables the method and provides for transferring IO data.

### BACKGROUND

Distributed Control System (DCS) are employed in a process plant for controlling plant processes in the process plant. DCS has controllers that are commonly embedded devices. A controller for a DCS can also be a general or Industrial Computer, Programming Logic Controller (PLC), and any computing unit capable of providing a real time execution environment to control applications.

It can be understood that control of processes is essential for proper functioning or operation of a process plant. The processes referred here are characterized by factors relating to process plant unit operation, associated hardware, control applications, workflow etc. Any change in these factors, especially the control applications, influences the operation of the process plant. These factors are also constrained by one or more of the system configuration, hardware capability, communication, current state of the process, and by its capabilities thereof, as applicable.

Generally, in a distributed control system (DCS), the controllers are distributed and are associated with one or more processes/units in a process plant. The process information are gathered by a controller through a input device connected to a transducer or transmitter, which are field devices, or directly from a field device using compatible protocols. Similarly, a controller output is used for actuation through an output device or directly through a field device using compatible protocols. It is common to have one or more Input-Output (IO) devices and field devices allocated to a specific controller i.e these devices would communicate with only the specific controller connected with them. Therefore, the control applications executing on a controller have access to a limited and preconfigured set of IO devices or field devices. Hardware device called Communication Interface (CI) module are used to connect and scale the number of IO units and field devices which can be allocated to a controller. The CI module also provides interface to variety of communication bus protocols amongst IO devices and controllers in the DCS. CI modules generally consist of a master and a slave hardware component where a CI master is attached to a controller while a CI slave is used as a convergence point for several IO/field devices. Thus, each IO unit is configured to serve and to be connected only to a single controller in a network. For efficient execution of control application, process information gathered from an IO unit or from field devices are as far as possible executed in a single controller. In cases, where this is not possible, process information are shared using controller to controller communication, thus providing indirect access of process information to another controller to execute associated control applications.

The configuration of a DCS in most cases is static, i.e., they do not generally allow direct access to IO units, dynamic sharing or migration of control application, or parts thereof (henceforth, parts thereof is said to be included in reference of control application), among peer controllers in a plant. However, in practical situations, a control system may be required to adopt or encounter with changes or modifications in its configuration with regard to one or more of the factors mentioned here above, during its operation. More commonly, changes purporting to control applications become significant that they need to be addressed online i.e. during the operation of the plant without stopping or suspending the plant operation to have the required changes be incorporated without disturbing the plant operation.

GB 2445636 describes an I/O card that is used to interface two process controllers over a communication line that is separate from a primary communication line connecting the two process controllers to a workstation. The process controllers can access I/O cards in the same manner as I/O cards connect to field devices. Inter-controller communications can be programmed as general I/O communication that may utilize Ethernet, Token ring, FDDI, ARCNET, WiFi, serial or parallel communication protocols.

There remains a need for a flexible configuration of a DCS that supports dynamic reconfiguration and has a means to provide direct access of process information to peer controllers in the DCS. There is a need for a solution that connects information from IO and field devices to their respective control applications in a situation that involves dynamic distribution of control applications in real time without disturbing the operation of the plant.

US 2010/100654 A1 discloses coupling a specialty system, such as a metering system, to multiple control systems.

WO 2007/021712 discloses a field-based asset management device and architecture.

WO 2006/119011 A2 discloses a versatile semiconductor manufacturing controller with statistically repeatable response times.

WO 99/50726 A1 discloses systems and methods for minimizing peer-to-peer control disruption during fail-over in a system of redundant controllers

### BRIEF DESCRIPTION

In one aspect, the invention provides a distributed control system. The distributed control system includes a plurality of controllers including at least one first controller and a second controller. The distributed control system includes at least one input/output (IO) device sending or receiving IO data along with communication devices including a switch. The distributed control system includes a first communication interface (CI) module adapted to function as a relay interface module being communicatively connectable with the at least one IO device and the at least one first controller from the plurality of controllers in the distributed control system, wherein the relay interface module communicates IO data between the at least one IO device and the at least one first controller from the plurality of controller in the distributed control system. The distributed control system includes a second communication interface (CI) module. The at least one first controller is an original location on which a control application is executed, wherein the control application is associated with the at least one IO device through a soft bridge comprised in the first communication interface module. The distributed control system is configured for moving the control application to the second controller, wherein location data is updated that the control application is being executed on the second controller and the first communication interface module is updated to route packets from the at least one IO device to the second communication interface module.

In another aspect, the invention provides a method for transferring Input Output (IO) data between a IO device and a first controller and a second controller from a plurality of controllers in a distributed control system with one or more relay interface modules, the first controller comprising a control application associated with the I/O device, wherein the first controller is an original location on which the control application is executed. The method includes reading a location data of the control application from a first communication interface (CI) module functioning as a relay interface module communicatively connected with the IO device, wherein the control application is associated with the IO device through a soft bridge comprised in the first communication interface module. The method includes transferring IO data between the IO device and the first controller from the plurality of controllers in the distributed control system based on the location data from the relay interface module. The method includes moving the control application to the second controller, wherein location data is updated that the control application is being executed on the second controller and the first communication interface module is updated to route packets from the at least one IO device to the second communication interface module.

Also disclosed herein is a distributed control system based on the method of the invention. The distributed control system comprises at least one I/O device which has IO data that is associated with a control application. The distributed control system of the invention then includes at least one controller comprising at least one control application, wherein one of the at least one control applications is associated with the I/O data. The distributed control system of the invention also comprises at least one communication interface module to transfer I/O device data between the I/O device to the associated control application via at least one relay interface module that comprises a location data for the IO data.

### DRAWINGS

These and other features, aspects, and advantages of the present invention will become better understood when the following detailed description is read with reference to the accompanying drawings in which like characters represent like parts throughout the drawings, wherein:
FIG. 1 is a block diagrammatic representation of representative components of an exemplary distributed control system;
FIG. 2 is a flowchart representation depicting exemplary steps for the method of the invention;
FIG. 3 shows a block diagrammatic representation of one exemplary embodiment of the distributed control system of the invention;
FIG. 4 shows a block diagrammatic representation of another exemplary embodiment of the distributed control system of the invention;
FIG. 5 shows a block diagrammatic representation of yet another exemplary embodiment of the distributed control system of the invention;
FIG. 6 shows a block diagrammatic representation of a further embodiment of the distributed control system of the invention;and
FIG. 7 shows a block diagrammatic representation of various configuration options in the distributed control system of the invention.

### DETAILED DESCRIPTION

The definitions provided herein are to facilitate understanding of certain terms used frequently herein and are not meant to limit the scope of the present disclosure.

As used in this specification and the appended claims, the singular forms "a", "an", and "the" encompass embodiments having plural referents, unless the content clearly dictates otherwise.

Unless otherwise indicated, all numbers expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein.

As used in this specification and the appended claims, the term "or" is generally employed in its sense including "and/or" unless the content clearly dictates otherwise.

As used herein, IO device means any device that is capable of handling input or providing an output in suitable manner that is relevant and useful in a given situation in a process plant. As used herein, an IO device is said to also include field devices that provide process data or receive data from a controller to provide an output in suitable manner that is relevant and useful in a given situation in a process plant. The IO devices are usually connected to a controller through a communication interface module.

As used herein, a distributed control system (DCS) refers to a control system of a process plant in which multiple controllers of the DCS are distributed and associated with various units of the process plant. The DCS has communication networks for communication of information, coordination & management and monitoring.

In a prior-art DCS system, each controller executes one or more control applications or part of a control application and can be directly connected with one or more IO devices. The IO devices collect process data for example data such as pressure, temperature, roller speed, conveyor belt speed, volume, and the like. Exemplary field devices that provide IO data include, for example, sensors. The control application in the controller then uses the IO data for a variety of other purposes, such as estimating if the plant is operating at set levels, if some adjustments are necessary for parameters of operation of the plant, or if any shutdown procedures are necessary to be invoked, and so on.

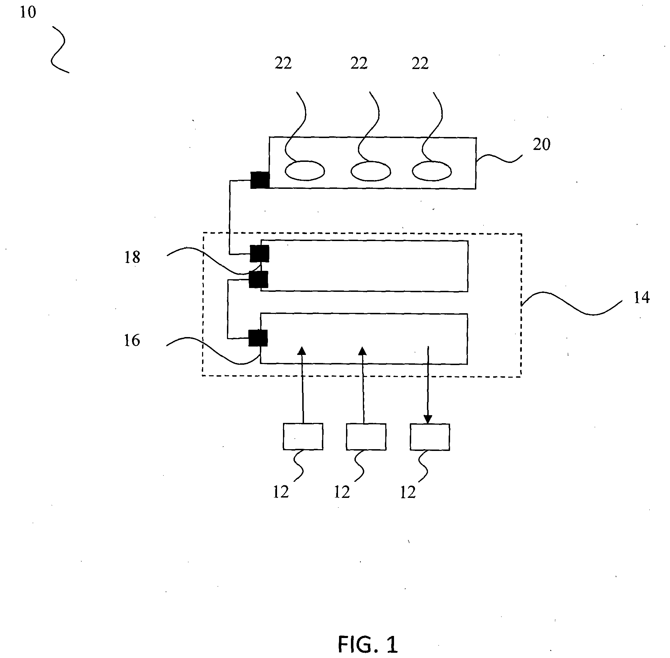

Fig. 1 shows a block diagrammatic representation of representative components of an exemplary prior-art distributed control system for a process plant, wherein a single controller and the associated components of the DCS is depicted by numeral 10. In the exemplary DCS shown herein, a plurality of IO devices 12 are connected to communication interface (CI) modules 14, shown here as comprising two components a communication slave 16 and a communication master 18. Typically, this connection is wired connection to ensure effective and immediate transfer of data with minimal loss. The CI module is connected to a controller 20, wherein the controller comprises one or more control applications 22 that are executed by the controller and to which the information from the IO devices are associated. The IO devices include field devices that are connectable to the CI module.

In some situations, a controller may have to invoke quite a few procedures for smooth operation of the plant, and consequently may become overloaded. Also in some other situations, a controller (without a redundant controller for standby) may become faulty, thus incapacitating some or all of the control functions associated with the controller. In such situations, one of the options is to transfer one or more control applications to another controller that is not overloaded, thus distributing the load more evenly across the existing controllers and improve reliability. For example, a control application that was running on a first controller is transferred to another controller. However, when a control application is transferred to another controller, the connectivity to IO devices may be lost or IO information may not be readily available, as the IO devices are connected to the first controller and not with the another controller to which the control application is transferred.

The invention provides a relay interface module that is connectable to a controller and also to an IO device. The relay interface module is configured to communicate data between the 10 device and at least one other controller that may be identified dynamically on a DCS network. The at least one other controller is a different controller from the controller (remote controller) to which the relay interface module is connected. The DCS network can be a controller network that is used by the controllers in the DCS for controller to controller communication or a private/dedicated communication network provided for communication between the relay interface modules (including communication with a prior-art communication interface module with suitable modification for communication) in the DCS. Thus, a relay interface module provides additional functionality with regard to providing connectivity to multiple controllers when compared with a prior-art communication interface module. The relay interface module (relay interface device) can be provided as an improved communication interface module or as an attachable additional component along with a prior-art communication interface module. Thus the relay interface device is provided as an integral unit with the communication interface module.

In one embodiment, the functionality of a relay interface module is made available as a software enabled component that is comprised within a communication interface module. The software enabled component can be for aspects such as establishing communication, transferring IO information or any other status/configuration related information. In another embodiment, the functionality of a relay interface module of the invention is made available as a software enabled component that is comprised within a controller or a computing device hosting controller functionalities. In both these configurations, the communication interface module or the controller wherein the functionality of a relay interface module has been installed or embedded to provide added capabilities due to this software enablement.

In a further embodiment, a relay interface module is provided as a specialized extraneous hardware component comprising a centralized switch used for communication. Alternately, a relay interface module or its functionality may be comprised within a local switch that is already present as part of a DCS, or is specifically made available for this purpose. In this embodiment, the communication interface module or the controller or both require additional configurations to adapt for sending and receiving information from the relay interface module.

In an embodiment of the invention, a DCS comprises a relay interface module communicating IO data to a first controller by a virtue of the relay interface module being connected to the first controller and the IO devices sending/receiving IO data being connected to the relay interface module. Here, the relay interface module has a means to act as a communication channel between IO devices and the first controller similar to a prior-art communication interface module. Further, the relay interface module has at least one additional means (eg additional Ethernet port, wireless connectivity) for being connected on a DCS network or a private network for connection with another relay interface module or another controller. Thus, a communication channel between the relay interface module and other controller (other than the first controller) can be established.

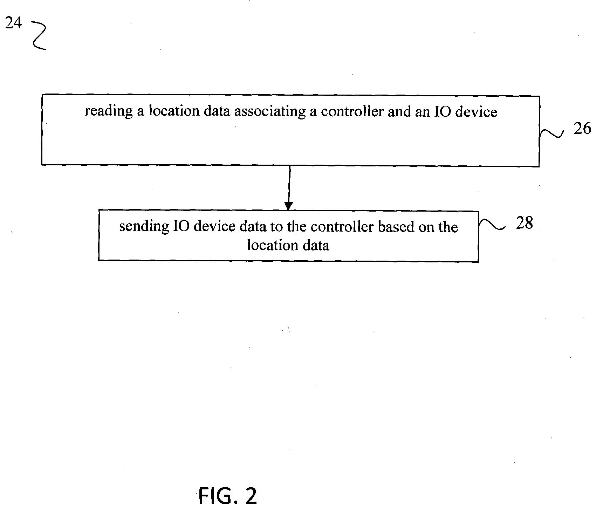

Also, as noted herein, in another aspect, the invention provides a method of transferring IO device data to/from a controller in a distributed control system. Fig. 2 shows exemplary method steps in a flowchart representation, depicted by the numeral 24. The method comprises reading a location data of a control application from a relay interface module that associates a controller with an IO device, as shown by numeral 26 in Fig. 2. The location data is dynamic that the value may change in time. The location data of a control application comprises location information of the controller on which the control application is being executed currently. It may have a location identity that is independent of other components. This data is constantly updated as often as necessary to ensure that the current location of the controller on which the application is being executed is made available. In one embodiment the update is only when the change in location occurs. In another embodiment the updating is on a periodic basis. The location data in addition may also include information of the IO device source. The relay interface module functionality may be a software module where a program is being executed on a communication module. In this approach, there exists an external hardware attached to the CI module called CI-CI communication module which is responsible for switching of the IO data packets across controllers.

The software component may be made available on a suitable medium such as CD-ROM, a storage disk, flash drive, or in any other manner known to those of ordinary skill in the art. Alternately, the software component may be made available on an EPROM or an EEPROM that is then installed into the relevant portion of the system so as to integrate the component seamlessly into the system without disturbing the operation of the entire system. Alternately, the relational interface module may be an additional hardware unit such as a centralized local switch that is made available for this express purpose.

In yet another embodiment, a relay interface module that comprises the current dynamic location data of the controller is made available through a wireless gateway, when a wireless gateway system is being used, or installed for this express purpose. The method involves sending (receiving) IO device data to (from) the controller currently executing the associated application for the IO device, shown in Fig. 2 by numeral 28.

The method of the invention may be made available advantageously as a computer readable medium comprising program instructions which when executed by a processor causes the processor to perform the method described herein. The instructions may alternately be made available as a software module on a hardware platform in the form of an independent DCS, programmable logic controller, standalone software that works with control system or other microprocessor based embedded systems. The program instructions when made available as a software module may be installed on an existing programmable system, such as a computer with sufficient computing capabilities. Thus, in yet another aspect, the invention provides a computer readable medium comprising program instructions which when executed by a processor causes the processor to perform the method described herein.

Further, as already noted herein, in another aspect, the invention provides a distributed control system based on the method of the invention. The invention provides for static configuration, where the association of controller and IO devices are static and for dynamic configuration, where the association of controller and IO devices may change in time. These configurations are illustrated through various exemplary embodiments. In one embodiment, the distributed control system comprises at least one IO device which is associated with a control application. The distributed control system of the invention then includes at least one controller that executes at least one control application, wherein one of the at least one control applications is associated with the IO device. Each control application is characterized by a location data (dynamic current location data). The distributed control system of the invention also comprises at least one communication interface module to transfer IO device data between the IO device to the associated control application via at least one relay interface module that comprises a dynamic current location data of the controller that comprises the associated control application for the IO device. The manner in which the dynamic current location data is made available may vary, and a few exemplary embodiments are described herein. Other variations and possibilities may occur to one skilled in the art, and are all contemplated to be within the scope of the invention.

In one embodiment of the DCS of the invention, the dynamic current location data of the controller on which each relevant application (control application) is being executed may be stored and retrieved based on instructions made available on a relay interface module that is a separate application which in turn is executed on a CI module.

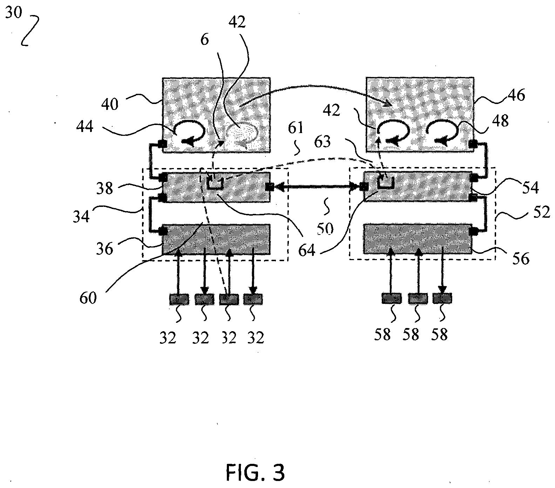

Fig. 3 is a block diagrammatic representation of this embodiment, wherein the distributed control system is represented by numeral 30. The IO devices 32 are connected to the CI module 34, which is depicted here as comprising a master 38 and a slave component 36. In this embodiment, a CI module is modified to function as a relay interface device. Controller 40 was the original location on which the applications 42 and 44 were being executed, wherein the application 42 is associated with a IO device 32, as depicted by the numerals 60 and 62, through a soft bridge 64 present in the CI module 34. Subsequently application 42 was moved to controller 46 wherein other applications may be running, such as application 48 in Fig. 3. The location data is updated that is the control application 42 is being executed on controller 46 and the CI module 34 is updated to route all the packets from the IO device 32 associated with control application 42 to be routed to the CI module 52 comprising a master 54 and a slave component 56. The new route for the IO device data is depicted by numerals 60, 61 and 63. This information is used to transfer the IO device data to controller 46, despite the fact that the controller 46 is linked to the IO devices 58 through the CI module 52. The transfer of information through the soft bridge module 64 is enabled by the soft bridge functionality present in the CI module 34 which refers to a switching table similar to the MAC table in an Ethernet switch. Here, the CI modules are said to be consisting of unique network identity and are capable of performing switching of IO data packets across multiple CI modules through CI-CI communication channel 50.

In some embodiments, each CI module may be linked to other CI modules through a separate hardware (not shown in the figure) that is responsible for switching of the IO data packets in the real time communication channel 50 that connects multiple such CI modules in a DCS. The CI master 38 of Controller 40 forwards all those data packets which are not required by any of the applications running in Controller 40 to the relay interface module of the Controller 46. After the successful migration of the control application 42, the CI module 34 of the controller 40 is updated to route all the data packets from relevant IO device to the CI module of controller 46 through the respective relay interface modules and the CI module 52 of the controller 46 is updated to accept all the data packets from the relevant IO device for control application 42.

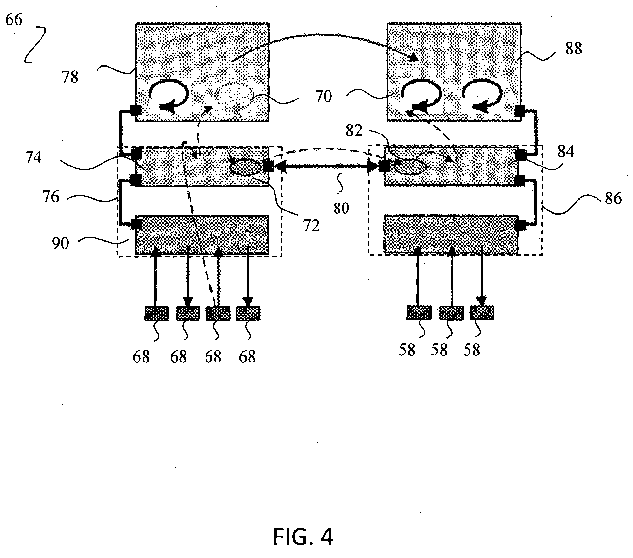

Fig. 4 is a block diagrammatic representation of an embodiment, wherein the distributed control system is represented by numeral 66 having controllers (78, 88) connected to IO devices (68, 58) through corresponding CI modules (76, 86). In this approach, after the successful migration of application 70 associated with IO devices 68 from the controller 78 to the controller 88, an instance of a virtual CI slave process 72 gets initiated in the master component 74 of the CI module 76 associated with controller 78. Similarly, an instance of a virtual CI master process 82 gets initiated in the master component 84 of the CI module 86 associated with controller 88. These two process instances initiates a point to point connection 80 similar to the CI master and slave. Thus the data packets from the relevant IO device traverse the path along IO Device 68→ CI Slave 90 → CI Master 74 → Virtual Slave 72 → Virtual Master 82 → CI Master 84 → Application 70. Other such variations of the applications and/or the hardware components will become apparent to one skilled in the art, and is contemplated to be within the scope of the invention.

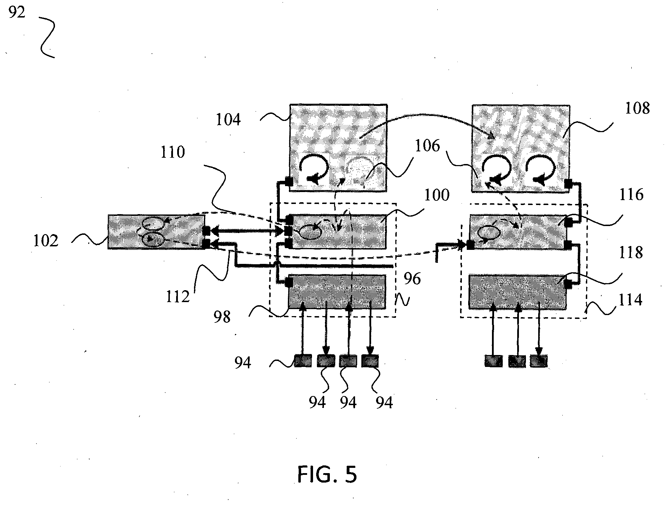

In another embodiment, the dynamic current location data of the controller is provided from a relay interface module that is comprises a network switch (centralized local switch) that is responsible for switching of the IO data packets across controllers. Fig. 5 shows a block diagrammatic representation of this embodiment, wherein the distributed control system is represented by numeral 92. The IO devices 94 are connected to the CI module 96 that comprises a CI module slave 98 and a CI module master 100. The CI module 96 is in turn connected to the centralized local switch 102 that comprises the dynamic current location data. Controller 104 was the original location on which the application 106 was being executed, but subsequently it was moved to controller 108. This dynamic current location data is updated on the centralized local switch 102. The CI module 96 of the controller 104 forwards all those data packets which are not required by any of the applications running in the controller 104 to the centralized local switch 102, depicted by the numeral 110. The centralized local switch 102 maintains a switching table in any suitable manner known in the art (eg similar to MAC table in an Ethernet switch). This table consists of information related to the mapping of an IO device 94 to corresponding application 106 and the controller 108 in which the application 106 is currently being executed. Subsequently, the relevant information and appropriate communication is established between the centralized local switch 102 and the controller 108, as shown by the numeral 112 through the CI module 114 and its respective master 116 and slave components 118. Alternately, one skilled in the art will also appreciate that the relay interface module may be comprised within a local switch, wherein the switch may be used for other purposes, or is specifically made available for the purposes as described herein.

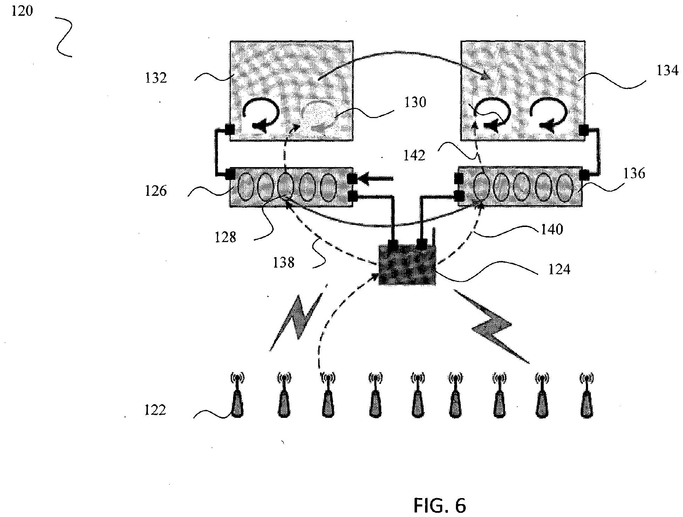

In yet another embodiment of the invention, the dynamic current location data of the application or the component thereof is provided via a wireless gateway. Fig. 6 shows a block diagrammatic representation of this embodiment, wherein the distributed control system is represented by numeral 120. The IO devices 122 are connected to the controllers through a wireless gateway, depicted in Fig. 5 by numeral 124. A wireless gateway is common point of convergence among several wireless IO units spread in the field. Also a wireless gateway can be connected to multiple CI modules 126 using wired communication medium. Each of the CI modules 126 maintains configuration images, such as 128, as one instance, of the IO units which send or receive data for the control applications running on the corresponding controller. When the application 130 was initially running on the controller 132, the CI module 126 of the controller 132 maintained a configuration image 128 of the IO device 124. Due to this the wireless gateway could communicate the IO data from the IO device to the CI module 126 of the controller 132. After the successful migration of the application 130 to controller 134, the configuration image 128 of the IO device 122 is also migrated from CI module 126 of controller 132 to the CI module 136 of controller 134. Prior to migration of the application 130, the data packets were directed along the path depicted by the arrow 138. After migration, the wireless gateway 124 now redirects the data packets from the IO device 122 to the CI module 136 of the controller 134 along the path depicted by the arrows 140 and 142.

The methods and systems described herein allow for the possibility to dynamically connect or disconnect IO devices in a field network. In the existing scenario, inserting or removing of an IO device requires shutdown of controller unit and hence shut down of the corresponding plant process, whereas in the systems described herein, an IO device can be plugged into the field device network by online updating and porting the preconfigured image of the IO configuration into the CI module (relay interface module).

In another embodiment, a DCS comprising of plurality of controllers and IO devices connected to respective controllers through a relay interface module can have a configuration of a controller along with information about active data or meta data used by the controller be stored in the relay interface module to be made available to another controller to which a control application is migrated. This feature allows easy porting of controller configuration into a new controller that may be another peer controller in the system or a replacement controller being attached to the relay interface module after a controller failure. Thus, the invention provides plug and play feature to controllers and allows soft configuration through the relay interface module and in coordination with a system server program that manage the entire system configuration.

There is a trend towards having real time Ethernet based network for IO communication in industrial automation. Moreover, the increased preference towards industrial PCs over embedded controller units for process automation allows for enabling features like runtime migration, distribution of the real time applications across distributed nodes, and the like. The methods and systems of the invention provides the advantage of enhanced productivity and reduced down time of the process plant by allowing seamless IO access across controllers in the DCS. The solutions described herein also allows for online addition or removal (plug and play IO) of new IO units (and also controller units) without process downtime.

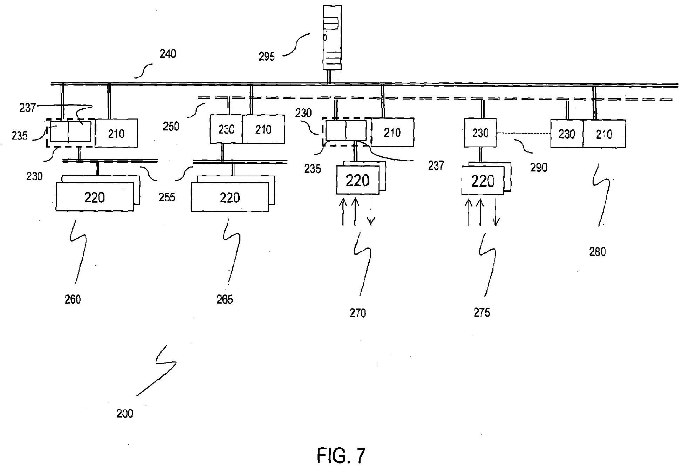

In another embodiment, a DCS 200 is provided as illustrated in Fig 7 to illustrate flexibility in configuration of the DCS. The DCS has multiple controllers 210 connected over a controller network 240, relay interface modules 230 and multiple IO devices 220 connected in corresponding field network 255. One or more servers 295 can be connected in the control network to support configuration of the controller system and also to provide control system data in the plant/enterprise network for engineering and monitoring of control data. The DCS 200 has a section of the control system configured as illustrated with the numeral 260. Here, the field devices 220 are connected to the relay interface module 230 that is interfaced with the controller 210 to establish communication between the controller and field devices. The relay interface module in addition is capable to communicate over the controller communication network 240 with one or more controllers on need basis.

Similarly, in the section of control system depicted by numeral 265, the relay interface device 230 is capable to communicate with other relay interface devices in the DCS through a communication network 250 that is available to connect relay interface devices (communication interface modules), for example, the relay interface device 230 in the DCS section 265 can communicate with the relay interface device 230 in the DCS section 270 that has the relay interface device connected to IO devices.

Further, the DCS 200 has a controller 210 that can be connected with a relay interface module 230 in the DCS 200 as shown in the DCS section depicted by numeral 280, wherein the relay interface module 230 may be connected to the controller 210 and not be connected to any IO device. In this embodiment. the controller can be executing a control application that uses IO data from a remote IO device from any other section of the DCS (eg from section 270 or section 275), wherein the IO data is made available through a remote relay interface module (a relay interface module other than the relay interface module connected with the controller, eg relay interface module 230 from section 270 or section 275) connected to the remote IO devices sending or receiving the IO data in the DCS.

In yet another embodiment of the invention, illustrated in Fig 7 with a section depicted using the numeral 275, IO devices 220 can be connected with a relay interface module 230 in the DCS 200 and the said relay interface module may not be connected to a controller. In this embodiment, a remote controller (controller not connected as an unit comprising of relay interface module including CI module and IO devices, for example controller 210 from sections 280, 270 or 265) can be executing a control application that uses IO data made available through the relay interface module 230 connected with the IO devices 220 in the DCS section 275. Further, a relay interface module in the DCS may have additional communication link for point to point communication as depicted in Fig 7 by the numeral 290 to ensure real time performance. The relay interface module 230 can also be provided as an integral unit with an attachment 235 (hardware or software) to a communication interface module 237 as shown in the section 260 and section 270 of the control system provided in Fig 7. Similar attachment arrangement can be provided to IO devices or to the controller for flexibility in communication of IO data between IO devices and one or more controllers.

Thus, a flexible configuration of DCS is provided that supports dynamic configurations in the DCS. The relay interface module as described in the various embodiment can be provided as a hardware or software enhancements in a communication interface module, IO devices, controllers or other communication devices (eg switch) used in the DCS. Also, the communication between the controller executing a control application can be established with IO devices providing the IO data for the control application directly through the relay interface module. The various embodiments illustrated in the invention provide the means to establish the communication and use of location data for proper routing of IO information.

While only certain features of the invention have been illustrated and described herein, many modifications and changes will occur to those skilled in the art. It is, therefore, to be understood that the appended claims are intended to cover all such modifications and changes as fall within the true spirit of the invention.

## Claims

1. A distributed control system (30) comprising:
a plurality of controllers including at least one first controller (40) and a second controller (46);
at least one input/output (IO) device (32) sending or receiving IO data along with communication devices including a switch;
a first communication interface (CI) module (34) adapted to function as a relay interface module being communicatively connectable with the at least one IO device (32) and the at least one first controller (40) from the plurality of controllers in the distributed control system,
wherein the relay interface module (34) communicates IO data between the at least one IO device and the at least one first controller (40) from the plurality of controller in the distributed control system; and
a second communication interface (CI) module (52),
wherein the at least one first controller (40) is an original location on which a control application (42) is executed, wherein the control application (42) is associated with the at least one IO device (32) through a soft bridge (64) comprised in the first communication interface module (34),
wherein the distributed control system is configured for moving the control application to the second controller (46), wherein location data of the control application is updated to indicate that the control application is being executed on the second controller (46) and the first communication interface module (34) is updated to route packets from the at least one IO device (32) to the second communication interface module (52).

2. The distributed control system (30) of claim 1 wherein the relay interface module communicates IO data between the at least one IO device (32) and the at least one first controller (40) from the plurality of controller in the distributed control system (30) wherein, the at least one first controller from the plurality of controller is a remote controller in the distributed control system.

3. The distributed control system (30) of claim 1 wherein the relay interface module communicates IO data between the at least one IO device (32) and the at least one first controller (40) from the plurality of controller in the distributed control system (30) wherein, the at least one IO device is a remote IO device in the distributed control system.

4. The distributed control system (30) of claim 1, wherein the relay interface module is provided as an integral unit with the first communication interface module in the distributed control system wherein, the relay interface module is provided as a communicatively connectable device with the first communication interface module or is comprised in the first communication interface module.

5. The distributed control system (30) of claim 1, wherein the relay interface module is provided as an integral unit with the at least one first controller (40) from the plurality of controller in the distributed control system wherein, the relay interface module is provided as a communicatively connectable device with the at least one first controller or comprised in the at least one first controller.

6. The distributed control system (30) of claim 1 wherein the relay interface module is an integral unit with the at least one IO device (32) in the distributed control system wherein, the relay interface module is provided as a communicatively connectable device with the at least one IO device (32) in the distributed control system (30) or is comprised in the at least one IO device.

7. The distributed control system (30) of claim 1, wherein the relay interface module comprises a switch.

8. The distributed control system (30) of claim 1, wherein the relay interface module comprises configuration information or/and location data associating the at least one first controller (40) and the at least one IO device (32).

9. The distributed control system (30) of claim 1 wherein the relay interface module communicates with at least one first controller (40) from plurality of controllers in the distributed control system (30) on a controller communication network in the distributed control system.

10. The distributed control system (30) of claim 1 wherein the relay interface module communicates with at least one another relay interface module using a dedicated communication network in the distributed control system.

11. The distributed control system (30) of claim 10 wherein the dedicated communication network includes a wireless gateway.

12. A method for transferring Input Output (IO) data between a IO device (32) and a first controller (40) and a second controller (46) from a plurality of controllers in a distributed control system (30) with one or more relay interface modules, the first controller comprising a control application (42) associated with the I/O device (32), wherein the first controller (40) is an original location on which the control application (42) is executed, the method comprising the steps of:
reading a location data of the control application (42) from a first communication interface (CI) module (34) functioning as a relay interface module communicatively connected with the IO device (32), wherein the control application (42) is associated with the IO device (32) through a soft bridge (64) comprised in the first communication interface module (34);
transferring IO data between the IO device (32) and the first controller from the plurality of controllers in the distributed control system based on the location data from the relay interface module; and
moving the control application to the second controller (46), wherein location data of the control application is updated to indicate that the control application is being executed on the second controller (46) and the first communication interface module (34) is updated to route packets from the at least one IO device (32) to the second communication interface module (52).

13. The method of claim 12 wherein the reading a location data is achieved by an initiation of a master-slave communication that is enabled between at least two relay interface modules.

14. The method of claim 12 wherein the location data is provided via a wireless gateway.

## Patentansprüche

1. Ein verteiltes Steuersystem (30), umfassend:
eine Vielzahl von Steuerungen, umfassend wenigstens eine erste Steuerung (40) und eine zweite Steuerung (46);
wenigstens eine Eingabe/Ausgabe (IO)-Vorrichtung (32), die zusammen mit Kommunikationsvorrichtungen, die einen Schalter umfassen, IO-Daten sendet oder empfängt;
eine erstes Kommunikationsschnittstellen (CI)-Modul (34), das angepasst ist, um als Relaisschnittstellenmodul zu arbeiten, das kommunikativ mit der wenigstens einen IO-Vorrichtung (32) und der wenigstens einen ersten Steuerung (40) der Vielzahl von Steuerungen im verteilten Steuersystem verbindbar ist, wobei das Relaisschnittstellenmodul (34) IO-Daten zwischen wenigstens einen IO-Vorrichtung und der wenigstens einen ersten Steuerung (40) der Vielzahl von Steuerungen im verteilten Steuersystem kommuniziert; und
ein zweites Kommunikationsschnittstellen (CI)-Modul (52),
wobei die wenigstens eine erste Steuerung (40) ein ursprünglicher Ort ist, an dem eine Steueranwendung (42) ausgeführt wird, wobei die Steueranwendung (42) durch eine im ersten Kommunikationsschnittstellen-Modul (34) enthaltene Soft-Bridge (64) mit der wenigstens einen IO-Vorrichtung (32) assoziiert ist,
wobei das verteilte Steuersystem eingerichtet ist, um die Steueranwendung zur zweiten Steuerung (46) zu transferieren, wobei Ortsdaten der Steueranwendung aktualisiert werden, um anzugeben, dass die Steueranwendung auf der zweiten Steuerung (46) ausgeführt wird, und das erste Kommunikationsschnittstellen-Modul (34) aktualisiert wird, um Pakete von der wenigstens einen IO-Vorrichtung (32) zum zweiten Kommunikationsschnittstellen-Modul (52) zu leiten.

2. Das verteilte Steuersystem (30) nach Anspruch 1, wobei das Relaisschnittstellenmodul IO-Daten zwischen der wenigstens einen IO-Vorrichtung (32) und der wenigstens einen ersten Steuerung (40) der Vielzahl von Steuerungen im verteilten Steuersystem (30) kommuniziert, wobei die wenigstens eine erste Steuerung der Vielzahl von Steuerungen eine Fernsteuerung im verteilten Steuersystem ist.

3. Das verteilte Steuersystem (30) nach Anspruch 1, wobei das Relaisschnittstellenmodul IO-Daten zwischen der wenigstens einen IO-Vorrichtung (32) und der wenigstens einen ersten Steuerung (40) der Vielzahl von Steuerungen im verteilten Steuersystem (30) kommuniziert, wobei die wenigstens eine IO-Vorrichtung eine Fern-IO-Vorrichtung im verteilten Steuersystem ist.

4. Das verteilte Steuersystem (30) nach Anspruch 1, wobei das Relaisschnittstellenmodul als eine integrale Einheit mit dem ersten Kommunikationsschnittstellen-Modul im verteilten Steuersystem bereitgestellt ist, wobei das Relaisschnittstellenmodul als eine mit dem ersten Kommunikationsschnittstellen-Modul kommunikativ verbindbare Vorrichtung bereitgestellt ist oder im ersten Kommunikationsschnittstellen-Modul enthalten ist.

5. Das verteilte Steuersystem (30) nach Anspruch 1, wobei das Relaisschnittstellenmodul als eine integrale Einheit mit der wenigstens einen ersten Steuerung (40) der Vielzahl von Steuerungen im verteilten Steuersystem bereitgestellt ist, wobei das Relaisschnittstellenmodul als eine mit der wenigstens einen ersten Steuerung kommunikativ verbindbare Vorrichtung bereitgestellt ist oder in der wenigstens einen ersten Steuerung enthalten ist.

6. Das verteilte Steuersystem (30) nach Anspruch 1, wobei das Relaisschnittstellenmodul als eine integrale Einheit mit der wenigstens einen IO-Vorrichtung (32) im verteilten Steuersystem bereitgestellt ist, wobei das Relaisschnittstellenmodul als eine mit der wenigstens einen IO-Vorrichtung (32) kommunikativ verbindbare Vorrichtung bereitgestellt ist oder in der wenigstens einen IO-Vorrichtung enthalten ist.

7. Das verteilte Steuersystem (30) nach Anspruch 1, wobei das Relaisschnittstellenmodul einen Schalter umfasst.

8. Das verteilte Steuersystem (30) nach Anspruch 1, wobei das Relaisschnittstellenmodul Konfigurationsinformationen oder/und Ortsdaten umfasst, die die wenigstens eine erste Steuerung (40) und die wenigstens eine IO-Vorrichtung (32) assoziierten.

9. Das verteilte Steuersystem (30) nach Anspruch 1, wobei das Relaisschnittstellenmodul mit der wenigsten einen ersten Steuerung (40) der Vielzahl von Steuerungen im verteilten Steuersystem (30) auf einem Steuerungskommunikationsnetzwerk im verteilten Steuersystem kommuniziert.

10. Das verteilte Steuersystem (30) nach Anspruch 1, wobei das Relaisschnittstellenmodul mit wenigsten einem anderen Relaisschnittstellenmodul unter Verwendung eines zugeordneten Kommunikationsnetzwerks im verteilten Steuersystem kommuniziert.

11. Das verteilte Steuersystem (30) nach Anspruch 10, wobei das zugeordnete Kommunikationsnetzwerk ein drahtloses Gateway umfasst.

12. Ein Verfahren zum Übertragen von Eingabe/Ausgabe (IO)-Daten zwischen einer IO-Vorrichtung (32) und einer ersten Steuerung (40) und einer zweiten Steuerung (46) aus einer Vielzahl von Steuerungen in einem verteilten Steuersystem (30) mit einem oder mehreren Relaisschnittstellenmodulen, wobei die erste Steuerung eine Steueranwendung (42) umfasst, die mit der I/O-Vorrichtung (32) assoziiert ist, wobei die erste Steuerung (40) ein ursprünglicher Ort ist, an dem die Steueranwendung (42) ausgeführt wird, wobei das Verfahren die Schritte umfasst:
Lesen von Ortsdaten der Steueranwendung (42) von einem ersten Kommunikationsschnittstellen (CI)-Modul (34), das als Relaisschnittstellenmodul arbeitet, das kommunikativ mit der IO-Vorrichtung (32) verbunden ist, wobei die Steueranwendung (42) durch eine im ersten Kommunikationsschnittstellen-Modul (34) enthaltene Soft-Bridge (64) mit der IO-Vorrichtung (32) assoziiert ist;
Übertragen von IO-Daten zwischen der IO-Vorrichtung (32) und der ersten Steuerung der Vielzahl von Steuerungen im verteilten Steuersystem basierend auf den Ortsdaten vom Relaisschnittstellenmodul; und
Transferieren der Steueranwendung zur zweiten Steuerung (46), wobei Ortsdaten der Steueranwendung aktualisiert werden, um anzugeben, dass die Steueranwendung auf der zweiten Steuerung (46) ausgeführt wird, und das erste Kommunikationsschnittstellen-Modul (34) aktualisiert wird, um Pakete von der wenigstens einen IO-Vorrichtung (32) zum zweiten Kommunikationsschnittstellen-Modul (52) zu leiten.

13. Das Verfahren nach Anspruch 12, wobei das Lesen der Ortsdaten durch Initiieren einer Master-Slave-Kommunikation erfolgt, die zwischen wenigstens zwei Relaisschnittstellenmodulen ermöglicht ist.

14. Das Verfahren nach Anspruch 12, wobei die Ortsdaten über ein drahtloses Gateway bereitgestellt werden.

## Revendications

1. Système de commande réparti (30) comprenant:
une pluralité de dispositifs de commande comprenant au moins un premier dispositif de commande (40) et un deuxième dispositif de commande (46);
au moins un dispositif d'entrée/sortie (ES) (32) envoyant ou recevant des données ES ensemble avec des dispositifs de communication comportant un commutateur;
un premier module d'interface de communication (CI) (34) adapté pour fonctionner comme un module d'interface de relais pouvant être connecté en communication avec l'au moins un dispositif ES (32) et l'au moins un premier dispositif de commande (40) de la pluralité de dispositifs de commande dans le système de commande réparti, dans lequel le module d'interface de relais (34) communique les données ES entre l'au moins un dispositif ES et l'au moins un premier dispositif de commande (40) de la pluralité de dispositifs de commande dans le système de commande réparti; et
un deuxième module d'interface de communication (CI) (52),
dans lequel l'au moins un premier dispositif de commande (40) est un emplacement original sur lequel est exécutée une application de commande (42), dans lequel l'application de commande (42) est associée à l'au moins un dispositif ES (32) par l'intermédiaire d'un pont flexible (64) compris dans le premier module d'interface de communication (34),
dans lequel le système de commande réparti est configuré pour déplacer l'application de commande vers le deuxième dispositif de commande (46), dans lequel les données d'emplacement de l'application de commande sont mises à jour pour indiquer que l'application de commande est exécutée sur le deuxième dispositif de commande (46) et le premier module d'interface de communication (34) est mis à jour pour acheminer des paquets de l'au moins un dispositif ES (32) vers le deuxième module d'interface de communication (52).

2. Système de commande réparti (30) selon la revendication 1, dans lequel le module d'interface de relais communique des données ES entre l'au moins un dispositif ES (32) et l'au moins un premier dispositif de commande (40) de la pluralité de dispositifs de commande dans le système de commande réparti (30), dans lequel l'au moins un premier dispositif de commande de la pluralité de dispositifs de commande est un dispositif de commande à distance dans le système de commande réparti.

3. Système de commande réparti (30) selon la revendication 1, dans lequel le module d'interface de relais communique des données ES entre l'au moins un dispositif ES (32) et l'au moins un premier dispositif de commande (40) de la pluralité de dispositifs de commande dans le système de commande réparti (30), dans lequel l'au moins un dispositif ES est un dispositif ES à distance dans le système de commande réparti.

4. Système de commande réparti (30) selon la revendication 1, dans lequel le module d'interface de relais est prévu comme une unité solidaire du premier module d'interface de communication dans le système de commande réparti, dans lequel le module d'interface de relais est prévu comme un dispositif pouvant être connecté en communication avec le premier module d'interface de communication ou est compris dans le premier module d'interface de communication.

5. Système de commande réparti (30) selon la revendication 1, dans lequel le module d'interface de relais est prévu comme une unité solidaire de l'au moins un premier dispositif de commande (40) de la pluralité de dispositifs de commande dans le système de commande réparti, dans lequel le module d'interface de relais est prévu comme un dispositif pouvant être connecté en communication avec l'au moins un premier dispositif de commande ou compris dans l'au moins un premier dispositif de commande.

6. Système de commande réparti (30) selon la revendication 1, dans lequel le module d'interface de relais est une unité solidaire de l'au moins un dispositif ES (32) dans le système de commande réparti, dans lequel le module d'interface de relais est prévu comme un dispositif pouvant être connecté en communication avec l'au moins un dispositif ES (32) dans le système de commande réparti (30) ou est compris dans l'au moins un dispositif ES.

7. Système de commande réparti (30) selon la revendication 1, dans lequel le module d'interface de relais comprend un commutateur.

8. Système de commande réparti (30) selon la revendication 1, dans lequel le module d'interface de relais comprend des informations de configuration ou/et des données d'emplacement associant l'au moins un premier dispositif de commande (40) et l'au moins un dispositif ES (32).

9. Système de commande réparti (30) selon la revendication 1, dans lequel le module d'interface de relais communique avec au moins un premier dispositif de commande (40) de la pluralité de dispositifs de commande dans le système de commande réparti (30) sur un réseau de communication de dispositifs de commande dans le système de commande réparti.

10. Système de commande réparti (30) selon la revendication 1, dans lequel le module d'interface de relais communique avec au moins un autre module d'interface de relais à l'aide d'un réseau de communication dédié dans le système de commande réparti.

11. Système de commande réparti (30) selon la revendication 10, dans lequel le réseau de communication dédié comporte une passerelle sans fil.

12. Procédé pour transférer des données d'entrée/sortie (ES) entre un dispositif ES (32) et un premier dispositif de commande (40) et un deuxième dispositif de commande (46) d'une pluralité de dispositifs de commande dans un système de commande réparti (30) avec un ou plusieurs modules d'interface de relais, le premier dispositif de commande comprenant une application de commande (42) associée au dispositif E/S (32), dans lequel le premier dispositif de commande (40) est un emplacement original sur lequel est exécutée l'application de commande (42), le procédé comprenant les étapes consistant à:
lire une donnée d'emplacement de l'application de commande (42) d'un premier module d'interface de communication (CI) fonctionnant comme module d'interface de relais connecté en communication avec le dispositif ES (32), dans lequel l'application de commande (42) est associée au dispositif ES (32) par l'intermédiaire d'un pont flexible (64) compris dans le premier module d'interface de communication (34);
transférer des données ES entre le dispositif ES (32) et le premier dispositif de commande de la pluralité de dispositifs de commande dans le système de commande réparti sur base des données d'emplacement du module d'interface relais; et
déplacer l'application de commande vers le deuxième dispositif de commande (46), où les données d'emplacement de l'application de commande sont mises à jour pour indiquer que l'application de commande est exécutée sur le deuxième dispositif de commande (46) et le premier module d'interface de communication (34) est mis à jour pour acheminer des paquets de l'au moins un dispositif ES (32) vers le deuxième module d'interface de communication (52).

13. Procédé selon la revendication 12, dans lequel la lecture d'une donnée d'emplacement est réalisée en initiant une communication maître-esclave qui est activée entre au moins deux modules d'interface de relais.

14. Procédé selon la revendication 12, dans lequel les données d'emplacement sont fournies par l'intermédiaire d'une passerelle sans fil.
